# EUROPEAN PATENT APPLICATION

(11) **EP 4 776 563 A1**
(43) Date of publication of application: **15.07.2026**
(21) Application number: 25216053.6
(22) Date of filing: 14.11.2025
(51) Int. Cl.: H04L 9/08

(54) **QUANTUM CRYPTOGRAPHY COMMUNICATION CONTROL DEVICE, QUANTUM CRYPTOGRAPHY COMMUNICATION SYSTEM, QUANTUM CRYPTOGRAPHY COMMUNICATION CONTROL METHOD, AND COMPUTER PROGRAM PRODUCT**

(30) Priority: 08.01.2025 JP 2025002890
(71) Applicant: KABUSHIKI KAISHA TOSHIBA, Kawasaki-shi, Kanagawa, 212-0013 (JP); Toshiba Digital Solutions Corporation, Kawasaki-shi, Kanagawa 212-0013 (JP)
(72) Inventor: TAKAHASHI, Ririka, Kawasaki-shi (JP); KODA, Kazuhisa, Kawasaki-shi (JP)
(74) Representative: Marks & Clerk LLP

(57) **Abstract**

In a quantum cryptography communication control device according to one arrangement, a collection unit collects link information of a link for which a local key is generated by quantum key distribution and a global key guarantee amount of each of a plurality of application pairs executing cryptography communication using a global key. A calculation unit calculates a link cost used for selecting a relay route of the global key based on the link information. A guarantee amount calculation unit calculates a local key guarantee amount allocated to the link for relaying the global key of each of the plurality of application pairs such that the guaranteed amounts of global keys for the plurality of application pairs are simultaneously satisfied. The selection unit selects the relay route of the global key based on the link cost and the local key guarantee amount.

## Description

### FIELD

Arrangements described herein relate generally to a quantum cryptography communication control device, a quantum cryptography communication system, a quantum cryptography communication control method, and a computer program product.

### BACKGROUND

A quantum cryptography communication control device that can guarantee the quality of service (QoS) originally expected by the application is known conventionally. In addition, a technique for determining a route of cryptography transmission using a quantum key distribution (QKD) network is known conventionally.

However, in the related art, it is difficult to optimally determine a route of cryptography transmission of a global key using a local key shared in each link of a key sharing network where quantum key distribution is utilized.

### BRIEF DESCRIPTION OF THE DRAWINGS

Fig. 1 is a diagram illustrating an example of a configuration of a quantum cryptography communication system according to an arrangement;
Fig. 2 is a diagram illustrating an example of a global key sharing process according to the arrangement;
Fig. 3 is a diagram illustrating an example of a configuration of a key sharing network (QKD network) on a minimum basis;
Fig. 4 is a diagram illustrating an example of a functional configuration of a node according to the arrangement;
Fig. 5 is a flowchart illustrating an example of a quantum cryptography communication control method according to the arrangement;
Fig. 6 is a diagram illustrating an example of application pair information according to the arrangement;
Fig. 7 is a diagram illustrating an example of link information according to the arrangement;
Fig. 8 is a diagram illustrating an example of a common definition (a variable and constraint conditions) in a guarantee amount calculation method according to the arrangement;
Fig. 9 is a diagram illustrating an example of objective functions in the guarantee amount calculation method according to the arrangement;
Fig. 10 is a diagram illustrating an example of a route constraint condition according to the arrangement;
Fig. 11 is a diagram illustrating an example of a common definition (a variable and constraint conditions) in a guaranteeable amount calculation method according to the arrangement;
Fig. 12 is a diagram illustrating an example of objective functions in the guaranteeable amount calculation method according to the arrangement;
Fig. 13 is a diagram illustrating an example of a common definition (a variable and constraint conditions) in the guarantee amount calculation method in Step S8 according to the arrangement;
Fig. 14 is a diagram illustrating an example of objective functions in the guaranteeable amount calculation method of Fig. 13;
Fig. 15 is a diagram illustrating an example of a configuration of Modification Example 1 of the arrangement;
Fig. 16 is a diagram illustrating an example of a configuration of Modification Example 2 of the arrangement; and
Fig. 17 is a diagram illustrating an example of a hardware configuration of a node 100 according to the arrangement.

### DETAILED DESCRIPTION

According to an arrangement, a quantum cryptography communication control device includes a collection unit, a calculation unit, a guarantee amount calculation unit, and a selection unit. The collection unit is configured to collect link information of a link for which a local key is generated by quantum key distribution and a guaranteed amount (guarantee amount) of a global key for each of a plurality of application pairs executing cryptography communication using a global key. The calculation unit is configured to calculate a link cost used for selecting a relay route of the global key based on the link information. The guarantee amount calculation unit is configured to calculate a guaranteed amount of a local key allocated to the link for relaying the global key of each of the plurality of application pairs such that guaranteed amounts of global keys for the plurality of application pairs are simultaneously satisfied. The selection unit is configured to select the relay route of the global key based on the link cost and the guaranteed amount of the local key.

Hereinafter, an arrangement of a quantum cryptography communication control device, a quantum cryptography communication system, a quantum cryptography communication control method, and a computer program product will be described in detail with reference to the accompanying drawings. The present disclosure is not limited to the following arrangements.

First, an example of a configuration of the quantum cryptography communication system according to the arrangement will be described.

### Example of Configuration

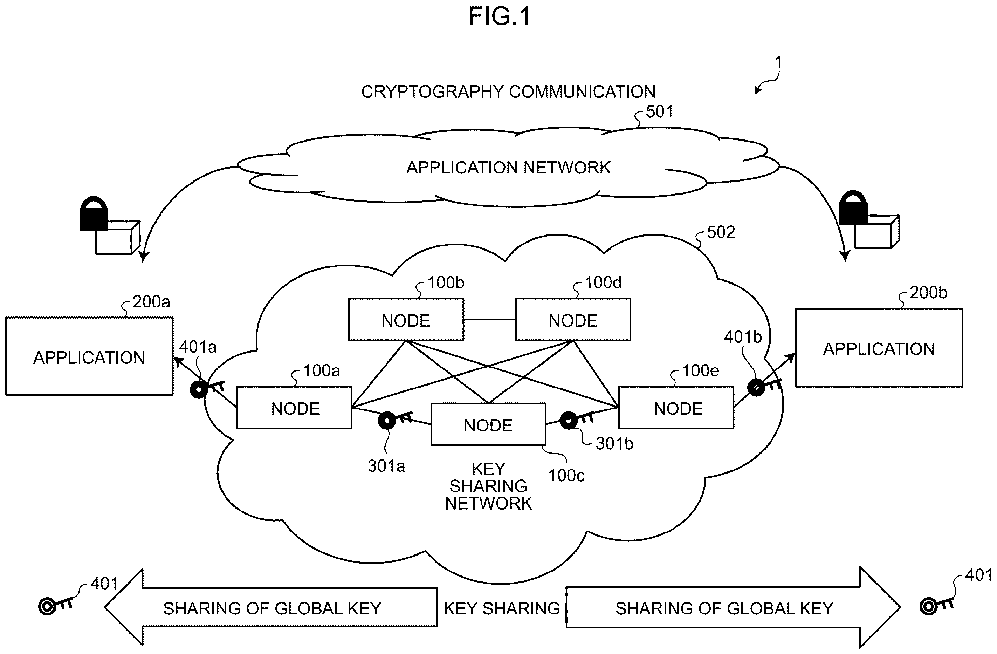

Fig. 1 is a diagram illustrating an example of a configuration of a quantum cryptography communication system 1 according to the arrangement. The quantum cryptography communication system 1 according to the arrangement includes nodes 100a to 100e, applications 200a and 200b, an application network 501, and a key sharing network 502.

For example, the node 100a is connected to the nodes 100b, 100c, and 100d through links. The node 100a shares a local key (quantum key) 301a by QKD through the link to the node 100b. In addition, independently of the generation of the cryptography key (quantum key) by QKD, the node 100a generates a cryptography key that is a random number as a global key 401a, and provides the generated cryptography key to the application 200a.

In addition, for example, the node 100e is connected to the nodes 100b, 100c, and 100d through links. The node 100e shares a local key 301b by QKD through the link to the node 100c. In addition, independently of the generation of the cryptography key by QKD, the node 100e generates a cryptography key that is a random number as a global key 401b, and provides the generated cryptography key to the application 200b.

Hereinafter, when it is not necessary to distinguish between the nodes 100a to 100e, the nodes 100a to 100e will be simply referred to as the node 100. When it is not necessary to distinguish between the applications 200a and 200b, the applications 200a and 200b will be simply referred to as the application 200. When it is not necessary to distinguish between the local keys 301a and 301b, the local keys 301a and 301b will be simply referred to as the local key 301. When it is not necessary to distinguish between the global keys 401a and 401b, the global keys 401a and 401b will be simply referred to as the global key 401.

The application 200 executes cryptography communication using the global key 401 through the application network 501.

The application network 501 is a network where data encrypted with the global key 401 is relayed (transmitted) and received.

The key sharing network 502 is a network where the local key 301 is shared between the nodes 100 connected to each other through the links.

In the example of Fig. 1 the number of the nodes 100 is 5. However, the number of the nodes 100 is not limited to 5. In addition, in the example of Fig. 1, the number of the applications 200 is 2. However, the number of the applications 200 is not limited to 2.

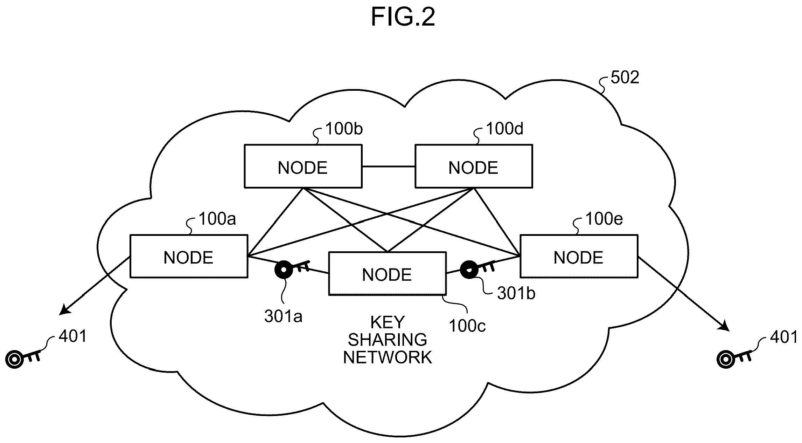

Fig. 2 is a diagram illustrating an example of a sharing process of the global key 401 according to the arrangement. As described above, the node 100 has a QKD function. Specifically, the node 100 has a function of generating and sharing a random number between the nodes 100 connected to each other through the links and a function of executing cryptography communication on the key sharing network 502 by using the generated random number as the local key 301.

Independently of the QKD function, the specific node 100 (in the example of Fig. 2, the nodes 100a and 100e) may have a function of generating a random number (in the example of Fig. 2, the global key 401) and a function of relaying/transmitting the random number generated by the function to a counterpart device.

Each of the nodes 100 executes routing for sharing the global key 401. Each of the nodes 100 shares (relays) the global key 401 using a path determined by the routing. The global key 401 is encrypted by a One Time Pad (OTP) using the local key 301 shared between the adjacent nodes 100 that are connected through the link, and is safely relayed to the counterpart node 100. In the OTP, a key that is once used for encryption is disposed, and thus a key having the same size as encrypted data is necessary. Here, in order to encrypt and relay the global key 401, the local key 301 having the same size as the global key 401 needs to be prepared.

In the example of Fig. 2, the global key 401 is shared between the node 100a and the node 100e, and is provided to the applications 200a and 200b.

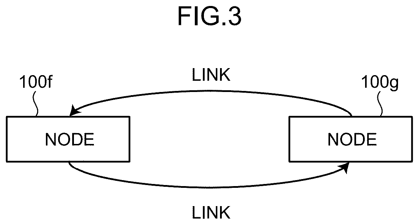

Fig. 3 is a diagram illustrating an example of a configuration of the key sharing network 502 on a minimum basis (of the minimum number of nodes). In the example of Fig. 3, the nodes 100f and 100g are connected through a link, and QKD is executed through the link. As illustrated in Fig. 3, the key sharing network 502 on a minimum basis is configured with a pair of the nodes 100f and 100g.

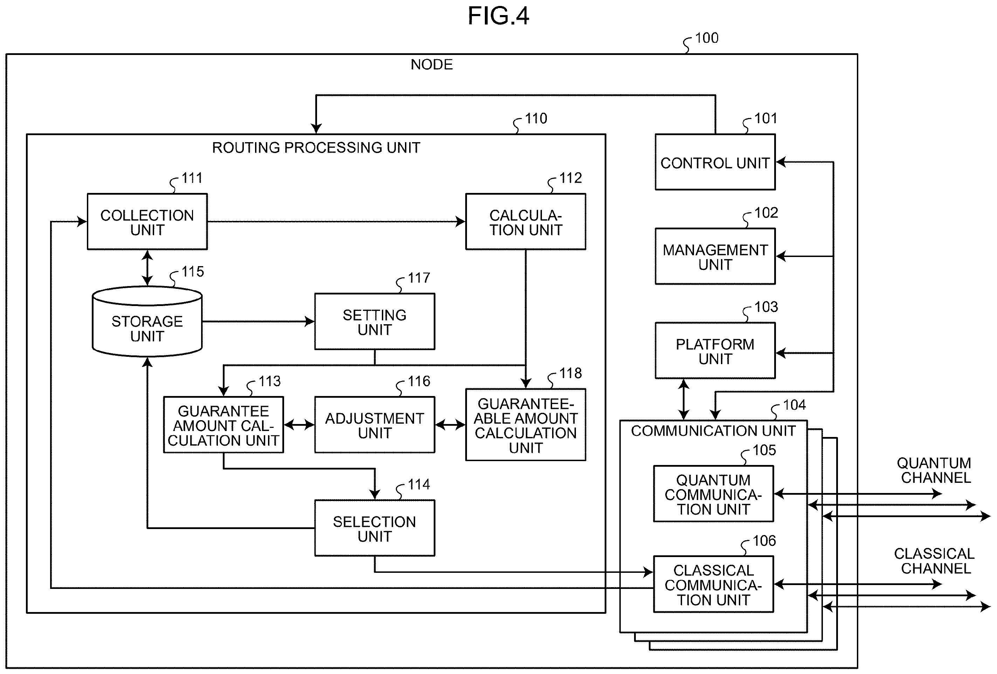

Fig. 4 is a diagram illustrating an example of a functional configuration of the node 100 according to the arrangement. The node 100 according to the arrangement (an example of the quantum cryptography communication control device) includes a control unit 101, a management unit 102, a platform unit 103, a communication unit 104, and a routing processing unit 110.

The routing processing unit 110 is a processing unit that executes routing (route control) of the global key 401.

The routing processing unit 110 includes a collection unit 111, a calculation unit 112, a guarantee amount calculation unit 113, a selection unit 114, a storage unit 115, an adjustment unit 116, a setting unit 117, and a guaranteeable amount calculation unit 118.

The control unit 101 executes a control of the process executed by the node 100. The control unit 101 is in charge of, for example, start-up of each component illustrated in Fig. 4. In addition, the control unit 101 controls a timing of route calculation (route recalculation) that is executed by the routing processing unit 110.

The management unit 102 manages key resources such as the local key 301 of the link connected to the node 100, a generation speed of a local key, and an amount of stored local key.

The platform unit 103 provides an operating system function of a computer required for managing and operating the other components of the node 100, a basic network function, a security function, and the like.

The communication unit 104 executes communication with another node 100 connected to the node 100. The communication unit 104 is provided for each link, and each communication unit 104 includes a quantum communication unit 105 and a classical communication unit 106. In the example of Fig. 4, the communication units 104 are connected through three links using the counterpart node 100 and the two types of communication I/F's (the quantum communication unit 105 and the classical communication unit 106).

The quantum communication unit 105 is connected to another node 100 through a quantum channel, and executes quantum communication with the other node 100. The quantum communication unit 105 shares a bit stream (random number) of photons for generating the local key 301 (cryptography key) using quantum key distribution (QKD) between the nodes 100 connected through the link.

The classical communication unit 106 is connected to another node 100 through a classical channel, and executes classical communication with the other node 100. Data exchanged between the nodes 100 connected through the classical communication unit 106 includes data such as the global key 401. The data such as the global key 401 is normally relayed through the classical communication unit 106 by cryptography communication using the local key 301 managed by the node 100.

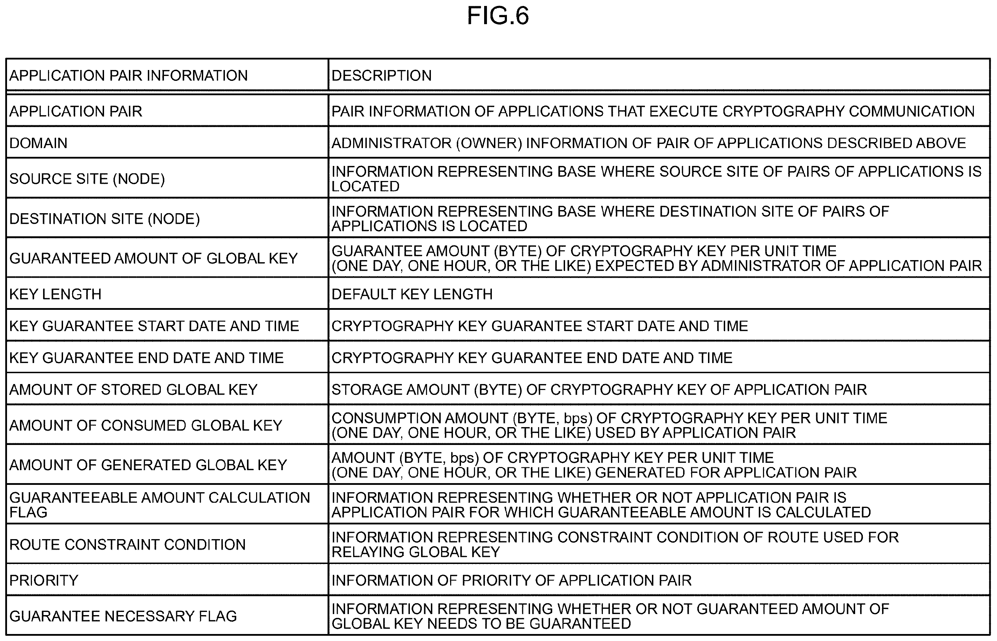

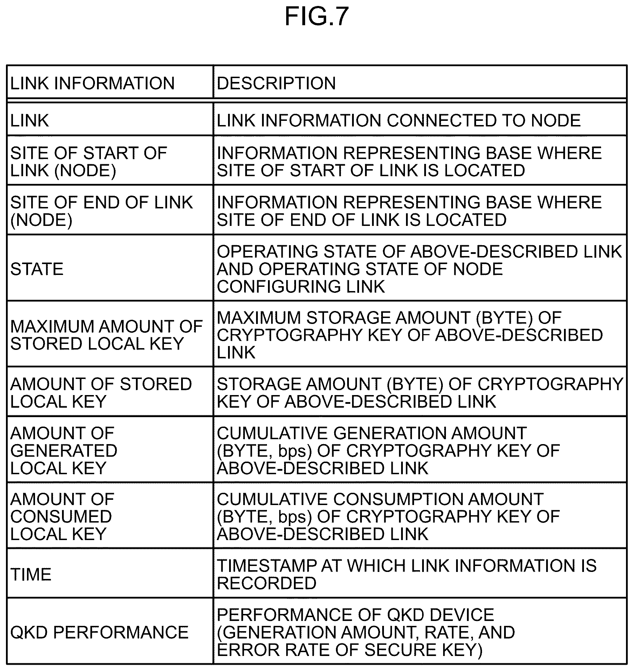

The collection unit 111 collects link information (refer to Fig. 7 described below) through the classical communication unit 106. The link information includes a state of a link connected to the node 100, a network address of the link, a cost for each link, network information, and the like. In addition, the collection unit 111 collects application pair information (refer to Fig. 6 described below) connected to the node 100. The collection unit 111 stores the link information and the application pair information that are collected in the storage unit 115.

The calculation unit 112 reads an amount of generated local key and an amount of stored local key of the link connected to the node 100 from the storage unit 115. Using the amount of generated local key and the amount of stored local key of the link connected to the node 100, the calculation unit 112 calculates a link capacity (the amount of the local key that is usable for flowing the data in the link) and a link cost based on the link capacity. Further using the state and the QKD performance, the calculation unit 112 may calculate a link capacity and a link cost based on the link capacity.

The guarantee amount calculation unit 113 calculates a guaranteed amount of a local key allocated to each link from the link capacity and the link cost calculated by the calculation unit 112 and a guaranteed amount of the global key acquired from the storage unit 115. The guaranteed amount of the global key refers to a global key amount requested for each application pair. The guaranteed amount of the local key refers to an amount of the local key of each link required for the guaranteed amount of the global key to be encrypted and decrypted.

The guarantee amount calculation unit 113 acquires an application pair stored as the application pair information and information of the guaranteed amount of the global key associated with the application pair. The guarantee amount calculation unit 113 collectively (simultaneously) executes calculation of the guaranteed amount of the local key allocated to each route to satisfy the guaranteed amounts of the global keys for guaranteed amounts of the global keys for a plurality (for example, all) of application pairs.

Specifically, in order to collectively execute the calculation of the guaranteed amount of each local key allocated to each link, the guarantee amount calculation unit 113 executes the calculation of the guaranteed amount of the local key as a multi-commodity flow problem. Using a variable for identifying an application pair and a guaranteed amount of a global key thereof, the guarantee amount calculation unit 113 calculates the multi-commodity flow problem such that the guaranteed amounts of the global keys for the plurality (for example, all) of application pairs are simultaneously satisfied. Specifically, the guarantee amount calculation unit 113 executes the calculation of calculating the guaranteed amount of the local key allocated to the link as a multi-commodity flow problem where the application pair is considered as a commodity and the guaranteed amount of the local key is considered as a flow such that the guaranteed amounts of the global keys are simultaneously satisfied.

In addition to the guaranteed amount of the global key, the guarantee amount calculation unit 113 may use an amount of stored global key, an amount of consumed global key, and an amount of generated global key for the guarantee amount calculation. When the guaranteed amount of the global key cannot be guaranteed, the adjustment unit 116 adjusts the guaranteed amount of the global key, and the guarantee amount calculation unit 113 executes the calculation again based on the adjusted, guaranteed amount of the global key.

The selection unit 114 selects an optimal path having the optimal metric from candidates of a plurality of optimal paths arriving at another node 100 based on metrics of the candidates, and generates an optimal path tree. The metric is determined based on the link cost and the guaranteed amount of the local key allocated to the link. For example, due to a reason that the link capacity has a margin, a path having a lower link cost is selected as a relay route. In addition, for example, a path having a larger guaranteed amount of the local key allocated to the link is selected as a relay route. The selection unit 114 generates a routing table from the optimal path tree, and stores the generated routing table in the storage unit 115.

The storage unit 115 stores a database of the link information (for example, an amount of generated local key, an amount of stored local key, the state, and the QKD performance), a database of the application pair information (for example, the guaranteed amount of a global key, an amount of stored global key, an amount of consumed global key, and a generation amount of global key), the routing table generated by the selection unit 114, and the like.

When the guaranteed amount of the local key allocated to each link is insufficient and a guaranteed amount of the global key requested from at least one application pair is not satisfied, the adjustment unit 116 adjusts the guaranteed amount of the global key for each application pair according to a predetermined policy.

For example, in order to adjust the guaranteed amount of the global key for each application pair, the adjustment unit 116 uses a priority of the application pair stored in the storage unit 115. In this case, for example, in the predetermined policy, as the priority lowers, a reduction in the guaranteed amount of the global key for each of the plurality of application pairs increases.

In addition, for example, the adjustment unit 116 requests the guaranteeable amount calculation unit 118 described below to calculate a guaranteeable amount of a global key (an amount that can be guaranteed for the global key). The adjustment unit 116 adjusts the guaranteed amount of the global key for each application pair to be the guaranteeable amount of the global key for each application pair calculated by the guaranteeable amount calculation unit 118.

In addition, for example, by repeating the adjustment of the guaranteed amount of the global key, the adjustment unit 116 may autonomously reduce the guaranteed amount of the global key until the guaranteed amount of the global key can be guaranteed. In this case, for example, in the predetermined policy, the guaranteed amounts of the global keys 401 of the plurality of application pairs are reduced uniformly. In addition, for example, in the predetermined policy, based on a usage history of the global key 401 of each of the plurality of application pairs, for an application pair with the less usage amount of the global key 401 that has been used, the reduction in the guaranteed amount of the global key for the application pair increases.

Using a route constraint condition stored in the storage unit 115, the setting unit 117 sets a route that is usable or not usable for the calculation of the guaranteed amount of the local key allocated to each route in the guarantee amount calculation unit 113. In addition, the setting unit 117 sets a route that is usable or not usable for the calculation of the guaranteeable amount by the guaranteeable amount calculation unit 118.

The guaranteeable amount calculation unit 118 calculates the guaranteeable amount of the global key and the guaranteed amount of the local key allocated to each link based on the link capacity and the link cost calculated in the calculation unit 112, the guaranteed amount of the global key acquired from the storage unit 115, and a guaranteeable amount calculation flag (refer to Fig. 6) described below.

The guaranteeable amount of the global key is less than or equal to the requested guaranteed amount of the global key, and is a global key amount that can be guaranteed in the quantum cryptography communication system 1 (maximum amount that can be guaranteed for a global key).

Specifically, when the guaranteeable amount calculation flag represents an application pair for which the guaranteeable amount is calculated, the guaranteeable amount calculation unit 118 calculates the guaranteeable amount of the global key and the guaranteed amount of the local key allocated to each link to satisfy the guaranteeable amount of the global key.

By further using the amount of stored global key, the amount of consumed the global key, and the amount of generated global key, the guaranteeable amount calculation unit 118 may calculate the guaranteeable amount of the global key and the guaranteed amount of the local key allocated to each route.

### Example of Quantum Cryptography Communication Control Method

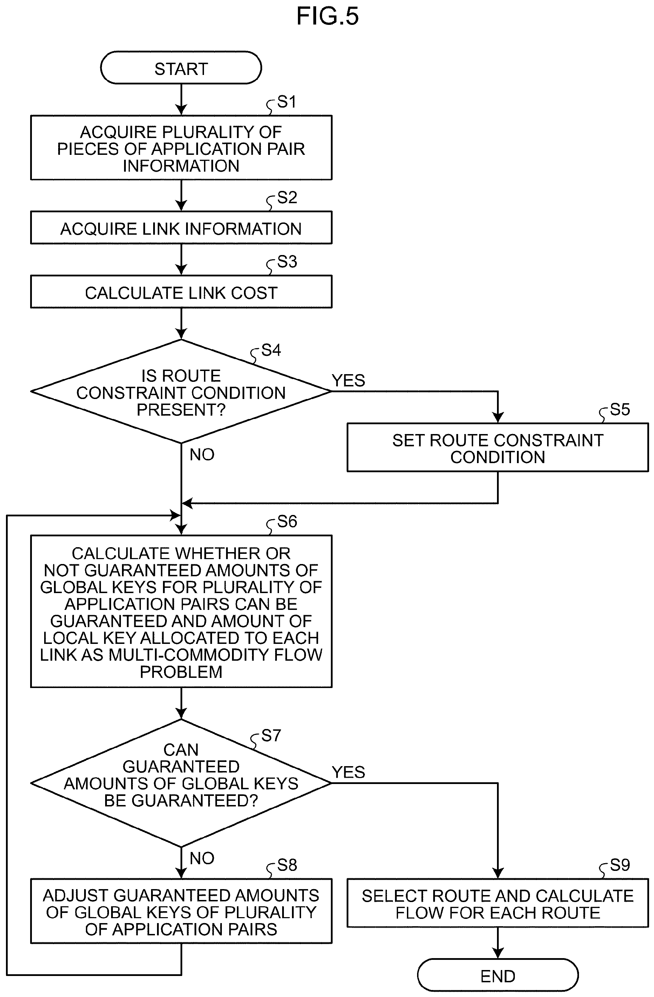

Fig. 5 is a flowchart illustrating an example of a quantum cryptography communication control method according to the arrangement. Fig. 5 is a flowchart illustrating a process example of the calculation unit 112, the guarantee amount calculation unit 113, the selection unit 114, the adjustment unit 116, the setting unit 117, and the guaranteeable amount calculation unit 118 in the routing processing unit 110.

First, the calculation unit 112 acquires a plurality (for example, all) of pieces of application pair information (the guaranteed amount of the global key, the amount of stored global key, the amount of consumed global key, the amount of generated global key, the guaranteeable amount calculation flag, the route constraint condition, and the priority) from the storage unit 115 (Step S1).

In the process of Step S1, instead of acquiring the application pair information from the storage unit 115, a request including the application pair information may be directly received from the application 200.

Fig. 6 is a diagram illustrating an example of the application pair information according to the arrangement. The application pair information according to the arrangement includes a pair of applications, a domain, a source site (the node 100), a destination site (the node 100), a guaranteed amount of a global key, a key length, a key guarantee start date and time, a key guarantee end date and time, an amount of stored global key, an amount of consumed global key, an amount of generated global key, a guaranteeable amount calculation flag, route constraint conditions, a priority, and a guarantee necessary flag.

The application pair is information representing a pair of applications 200 that execute cryptography communication.

The domain is information representing an administrator (owner) of the application pair.

The source site (the node 100) is indicative of information representing a base (the node 100) at which the source site of the application pair is located. The destination site (the node 100) is indicative of information representing a base (the node 100) at which the reception side of the application pair is located. The source site and the destination site are used as a start point and an end point during the guarantee amount calculation, the guaranteeable amount calculation, and the route selection.

The guaranteed amount of the global key is the guaranteed amount (byte) of the cryptography key (global key 401) per unit time (for example, one day, one hour, or one minute) expected (required) by a user of the application pair (for example, the administrator of the application pair).

For example, the guaranteed amount of the global key is received by registration from the application 200 or the pair of applications 200. In addition, for example, the guaranteed amount of the global key may be received by registration from the user who uses the pair of applications 200.

When the guaranteed amount of the global key is not registered, estimation is performed for the necessary amount of a global key that is actually generated based on the information (the storage amount, the consumption amount, or the generation amount) of the global key 401 other than the guaranteed amount of the global key.

The guaranteed amount of the global key or the necessary amount of the global key is used as a parameter of the link cost.

The key length is the length of the cryptography key (global key 401). The key guarantee start date and time is the guarantee start date and time of the cryptography key (global key 401). The key guarantee end date and time is the guarantee end date and time of the cryptography key (global key 401).

The amount of stored global key is the storage amount (byte) of the cryptography key (global key 401) used in the application pair.

The amount of consumed global key is the consumption amount (byte, bps) of the cryptography key (global key 401) per unit time (for example, one day, one hour, or one minute) used by the application pair.

The amount of generated global key is the generation amount (byte, bps) of the cryptography key (global key 401) per unit time (for example, one day, one hour, or one minute) generated for the application pair.

The guaranteeable amount calculation flag is information representing whether or not the application pair is an application pair for which the guaranteeable amount is calculated (i.e., The guaranteeable amount calculation flag is information indicative of an application pair for which the guaranteeable amount is calculated or an application pair for which the guaranteeable amount is not calculated). The calculation of the guaranteeable amount is the calculation of the maximum global key amount that can be guaranteed for the application pair. For example, when the guaranteeable amount calculation flag is 1, the application pair is an application pair for which the guaranteeable amount is calculated, and when the guaranteeable amount calculation flag is 0, the application pair is not an application pair for which the guaranteeable amount is calculated. When the guaranteeable amount calculation flag is not provided and the guaranteed amount of the global key is 0, it may be determined that the application pair is an application pair for which the guaranteeable amount is calculated.

The route constraint condition represents a constraint condition of a route used for relaying the global key 401. Specifically, a link that is used for relaying the global key 401 or a link that is not used for relaying the global key 401 is designated. Depending on the route constraint condition, each application pair (user) can designate a link that is desired to be used or a link that is desired not to be used for the distribution of the global key 401, and thus can smoothly deal with the desire of the user.

The priority is information representing a priority of the application pair for which the requested global key guarantee amount is guaranteed. For example, the priority is set depending on a request from the application pair (user), a contract form, or the like.

When the guarantee amount of a global key for at least one application pair is not satisfied due to the performance of the key sharing network 502, the guarantee necessary flag represents whether or not the application pair is an application pair for which the guaranteed amount of the global key needs to be guaranteed (i.e., the guarantee necessary flag is indicative of an application pair necessitating guaranteeing the guaranteed amount of the global key or an application pair not necessitating guaranteeing the guaranteed amount of the global key). For example, when the guarantee necessary flag is 1, the indication is necessitating guaranteeing the guaranteed amount of the global key, and when the guarantee necessary flag is 0, the indication is not necessitating guaranteeing the guaranteed amount of the global key.

The application pair information illustrated in Fig. 6 is an example. Among the application pair information illustrated in Fig. 6, for example, the domain, the key length, the key guarantee start date and time, the key guarantee end date and time, the guaranteeable amount calculation flag, the route constraint condition, the priority, and the guarantee necessary flag are arbitrary, and the application pair information does not necessarily include, for example, the domain, the key length, the key guarantee start date and time, the key guarantee end date and time, the guaranteeable amount calculation flag, the route constraint condition, the priority, and the guarantee necessary flag.

Next, referring back to Fig. 5, the calculation unit 112 acquires the link information (for example, the local key generation amount, the local key storage amount, the state, and the QKD performance) from the storage unit 115 (Step S2).

Fig. 7 is a diagram illustrating an example of the link information according to the arrangement. The link information according to the arrangement includes a link, a site of start of the link (node), a site of end of the link (node), a state, a local key maximum storage amount, a local key storage amount, a local key generation amount, a local key consumption amount, the time, and the QKD performance.

The link is information representing a link connected to the node 100.

The site of start of the link (node) is information representing a base where the start point side of the link is located.

The site of end of the link (node) is information representing a base where the end point side of the link is located.

The state is the operating state of the link and the operating state of the node 100 configuring the link.

The maximum amount of stored local key is the maximum storage amount (byte) of the cryptography key (local key 301) of the link, and represents the storage capacity of the cryptography key (local key 301) of the link.

The amount of stored local key is the storage amount (byte) of the cryptography key (local key) of the link, and represents the amount of stored cryptography key (local key 301) that is currently stored.

The amount of generated local key is the cumulative generation amount (byte, bps) of the cryptography key (local key 301) of the link.

The maximum amount of stored local key, the amount of stored local key, and the amount of generated local key are used as parameters of the link capacity and the link cost.

The amount of consumed local key is the cumulative consumption amount (byte, bps) of the cryptography key (local key 301) of the link.

The time is a timestamp representing the time at which the link information is recorded.

The QKD performance is the performance of a QKD device (in the example of Fig. 1, the node 100). For example, the QKD performance is an amount of generated secure key, a secure key rate, and an error rate. The secure key is a key before generating the local key 301, and is different from the local key 301 in that it is not divided into a key for encryption and a key for decryption.

The link information illustrated in Fig. 7 is an example. Among the link information illustrated in Fig. 7, for example, the state is arbitrary, and the link information does not necessarily include, for example, the state.

Next, referring back to Fig. 5, the calculation unit 112 calculates the link capacity and the link cost based on the link capacity using the link information acquired in Step S2 (Step S3). The link cost is used for the calculation of the guaranteed amount of the global key 401, the calculation of the guaranteeable amount of the global key 401, and the selection of the relay route of the global key 401.

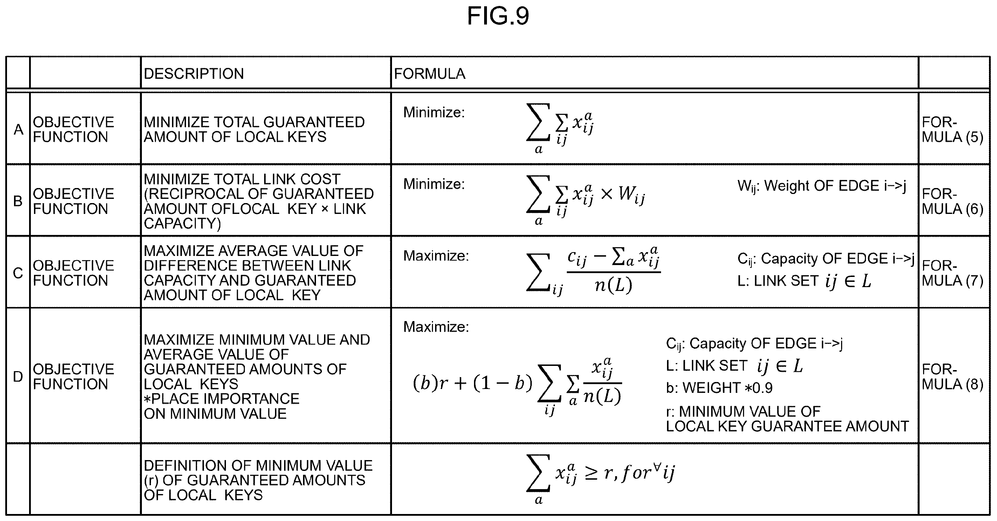

Calculation formulae of the link capacity and the link cost will be described below using Fig. 9. In addition, in the process of Step S3, estimation may be performed for the necessary amount of the global key that needs to be actually generated from the guaranteed amount of the global key.

Next, the setting unit 117 determines whether or not the route constraint condition is present in the application pair information data acquired in Step S1 (Step S4).

When the route constraint condition is present (Step S4, Yes), the setting unit 117 sets the route constraint condition of the application pair that is a target of the guarantee amount calculation (Step S5). For example, as constraint conditions for calculation that satisfy the requested global key request amounts for a plurality of application pairs, the setting unit 117 sets a link that is used for the relay route of the global key 401 or a link that is not used for the relay route of the global key 401 for each application pair.

Next, the guarantee amount calculation unit 113 calculates whether or not the guaranteed amounts of the global keys for the plurality of application pairs can be guaranteed and calculates the amount of the local key allocated to each link as the multi-commodity flow problem (Step S6). Specifically, the guarantee amount calculation unit 113 calculates the guaranteed amount of the local key as the amount of the local key required for each link in order to satisfy the guaranteed amounts of the global keys for the plurality of application pairs.

For the calculation in Step S6, the following information is used.
· The guaranteed amounts of the global keys (or the above-described necessary amounts of the global keys) for the plurality of application pairs acquired in Step S1
· The amount of the local key that can be used in the link calculated from the link information (the amount of generated local key, the amount of stored local key, the state, and the QKD performance) acquired in Step S2
· The link cost calculated in Step S3

The calculation of Step S6 corresponds to solving a multi-commodity flow problem where the application pair is considered as a commodity and the guaranteed amount of the local key (the amount of the local key used for encrypting the global key 401 in the node on the site of start of the link, relaying the encrypted global key 401 to the link, and decrypting the global key 401 in the node on the site of end of the link) required for each application pair to execute the cryptography relaying of the global key 401 is considered as a flow. The calculation of the guarantee amount calculation unit 113 is executed for identifying the guaranteed amount of the global key for each application pair using a variable for identifying each application pair.

Through the process of Step S6, the calculation is executed such that the guaranteed amounts of the global keys for the plurality of application pairs (users) are simultaneously satisfied. Therefore, irrespective of the registration order of each application pair (without advantage of an application pair that is previously registered), the resources (local key amounts) of the key sharing network 502 can be efficiently used.

Next, the adjustment unit 116 determines whether or not the guaranteed amounts of the global keys can be guaranteed for the plurality of application pairs based on the calculation result of Step S6 (Step S7).

When the guaranteed amounts of the global keys can be guaranteed for the plurality of application pairs (Step S7, Yes), the selection unit 114 executes the selection of the route and the calculation of the flow for each route based on the link cost calculated in Step S3 and the guaranteed amount of the local key of each link calculated in Step S6 (Step S9). In the selection of the route, a link used as a route for relaying the global key 401 is selected. In the calculation of the flow, the local key amount used in the link of the route is calculated.

When the guaranteed amounts of the global keys cannot be guaranteed for the plurality of application pairs (Step S7, No), the adjustment unit 116 adjusts the guaranteed amounts of the global keys for the plurality of application pairs according to a policy of an adjustment method (Step S8), and the process returns to Step S6.

When the guaranteed amounts of the global keys cannot be guaranteed as a result of the calculation in the guarantee amount calculation unit 113, the process does not proceed to the selection of the route and the calculation of the flow for each route, and the distribution of the global key 401 requested for the application pair cannot be executed at all. Accordingly, the adjustment unit 116 adjusts the guaranteed amount of the global key for the application pair through the process of Step S8, and executes the calculation of Step S6 again with the key amount (a part of the requested global key guarantee amount) that is less than the global key guarantee amount requested from the application pair. That is, due to the adjustment of the guaranteed amount of the global key, the global key 401 can be distributed even with the key amount that is a part of the global key guarantee amount requested from the application pair.

Next, the details of examples of the adjustment method by the adjustment unit 116 or the guaranteeable amount calculation unit 118 according to the arrangement will be described.

### Adjustment Method 1: Calculation of Guaranteeable Amount

When the guaranteeable amount calculation flag represents an application pair for which the guaranteeable amount is calculated, the adjustment unit 116 requests the guaranteeable amount calculation unit 118 to calculate a guaranteeable amount of the global key.

The guaranteeable amount calculation unit 118 calculates the guaranteeable amount of the global key as the maximum guaranteed amount of the global key that can be guaranteed simultaneously for the plurality (for example, all) of application pairs, and calculates an amount of the local key allocated to each link according to the guaranteeable amount of the global key. That is, the guaranteeable amount calculation unit 118 calculates a guaranteed amount of a local key allocated to the link for relaying the global key 401 of each of the plurality of application pairs such that the guaranteed amounts of the global keys 401 for the plurality of application pairs are simultaneously satisfied.

The guaranteeable amount calculation unit 118 executes the calculation of calculating the guaranteed amount of the local key allocated to the link as a multi-commodity flow problem where the application pair is considered as a commodity and the guaranteed amount of the local key is considered as a flow such that the guaranteeable amounts of the global keys 401 are simultaneously satisfied.

In the adjustment method 1, by using the calculation result of the guaranteeable amount calculation unit 118, the calculation of the guarantee amount calculation unit 113 of Step S6 of the next loop and the determination of the adjustment unit 116 of Step S7 are unnecessary, and the process can proceed to Step S9 in the next loop.

Here, there may be a difference in the guaranteed amount of the global key adjusted for each application pair, which may be unfair.

### Adjustment Method 2: Uniform Reduction

The adjustment unit 116 uniformly reduces the guaranteed amounts of the global keys requested from each of the plurality (for example, all) of application pairs. The guarantee amount calculation unit 113 repeats the calculation of the guaranteed amount until the guaranteed amounts of the global keys for the plurality of application pairs can be guaranteed.

In the adjustment method 2, the guaranteed amount of the global key requested from each application pair can be fairly reduced. Here, the loop of Step S6 to Step S8 needs to be repeated until the guaranteed amounts of the global keys requested from the plurality of application pairs can be simultaneously guaranteed.

### Adjustment Method 3: Priority

The adjustment unit 116 weights the guaranteed amount of the global key based on the application pair information data (priority) of the storage unit 115, and changes the guaranteed amount of the global key for the application pair to be given to the guarantee amount calculation unit 113.

For example, the priority may be determined depending on a setting from the application pair. In addition, for example, the priority may be determined based on information in the quantum cryptography communication system 1. Examples of the information in the quantum cryptography communication system 1 include a guaranteed amount of a global key before adjustment, a remaining period of a unit guarantee period of an application pair, the number of application pairs in a domain, a total amount of consumed local keys 301 in the links of the key sharing network 502, and the number of links to be passed (number of hops).

The guarantee amount calculation unit 113 repeats the calculation of the guarantee amount until the guaranteed amounts of the global keys for the plurality of application pairs can be guaranteed.

In the adjustment method 3, the guaranteed amount of the global key can be adjusted depending on the priority of the application pair. Here, the loop of Step S6 to Step S8 needs to be repeated until the guaranteed amounts of the global keys can be guaranteed.

### Adjustment Method 4: Use of Recent History of Global Key 401

The adjustment unit 116 adjusts the guaranteed amount of each application pair based on a history of the amount of the global key that has been used by the application pair in a recent period N (the unit of the period is arbitrary).

In the adjustment method 4, by adjusting the amount of the global key according to the recent usage history of the global key 401, the adjustment is executed such that, as the possibility that the application pair may use the global key 401 from now increases, the amount of the global key increases.

### Adjustment Method 5: Use of Previous History of Global Key 401

The adjustment unit 116 adjusts the guaranteed amount of the global key of each application pair based on a usage record in which the global key 401 has been used in the unit guarantee period.

In the adjustment method 5, by adjusting the guaranteed amount of the global key according to the previous usage history of the global key 401, the adjustment is executed such that, as the possibility that the application pair may use the global key 401 from now increases, the guarantee amount of the global key increases.

### Adjustment Method 6: Use of Guaranteed Amount of Remaining Key

The adjustment unit 116 determines an adjustment amount based on the guaranteed amount of the global key (the amount of the global key that may be used from now) in the remaining period of the unit guarantee period (for example, one day). For example, as the remaining period of the unit guarantee period of the global key 401 decreases, a reduction in the guaranteed amount of the global key for the application pair by the adjustment unit 116 increases.

In the adjustment method 6, by adjusting the guaranteed amount of the global key according to the amount of a global key that is scheduled to be used from now, the adjustment is executed such that, as the possibility that the application pair may use the global key 401 from now increases, the guaranteed amount of the global key increases.

### Adjustment Method 7: Guarantee Necessity

The adjustment unit 116 changes the guaranteed amount of the global key depending on necessitating guaranteeing or not necessitating guaranteeing the global key 401 based on the application pair information data (guarantee necessary flag) of the storage unit 115. The adjustment unit 116 adjusts (reduces) the guaranteed amount of the global key for the application pair not necessitating guaranteeing the global key 401 without changing the guaranteed amount of the global key for the application pair necessitating guaranteeing the global key 401. When the guaranteed amount of the global key for the application pair necessitating guaranteeing the global key 401 cannot be secured, the adjustment unit 116 sets the priority to be high, and executes the adjustment using the method of the priority of the adjustment method 3 (in combination with the adjustment method 3).

In the adjustment method 7, for example, the guaranteed amount of the global key can be adjusted by determining whether or not the global key guarantee is necessary depending on a contract.

The above-described adjustment methods 1 to 7 may be applied independently or may be applied in combination with each other. For example, the guaranteeable amount may be distributed (adjustment method 1) according to the priority of the application pair (adjustment method 3). For example, the guaranteed amount that is uniformly reduced may be set (adjustment method 2) according to the priority of the application pair (adjustment method 3).

Next, the details of examples of the guarantee amount calculation method using the guarantee amount calculation unit 113 according to the arrangement will be described. Examples of formulae for allowing the guarantee amount calculation unit 113 to calculate the multi-commodity flow problem will be described below. In the following example, variables for identifying an application pair and a guaranteed amount of the global key associated with the application pair are introduced, and the calculation of the guaranteed amount of the global key is executed as the multi-commodity flow problem.

An object of the multi-commodity flow problem described below is to collectively calculate distribution routes of the global keys 401 of previously registered application pairs and newly registered application pairs such that an optimal global key distribution route where the local keys 301 of the links are not occupied by only the previously registered application pairs is determined.

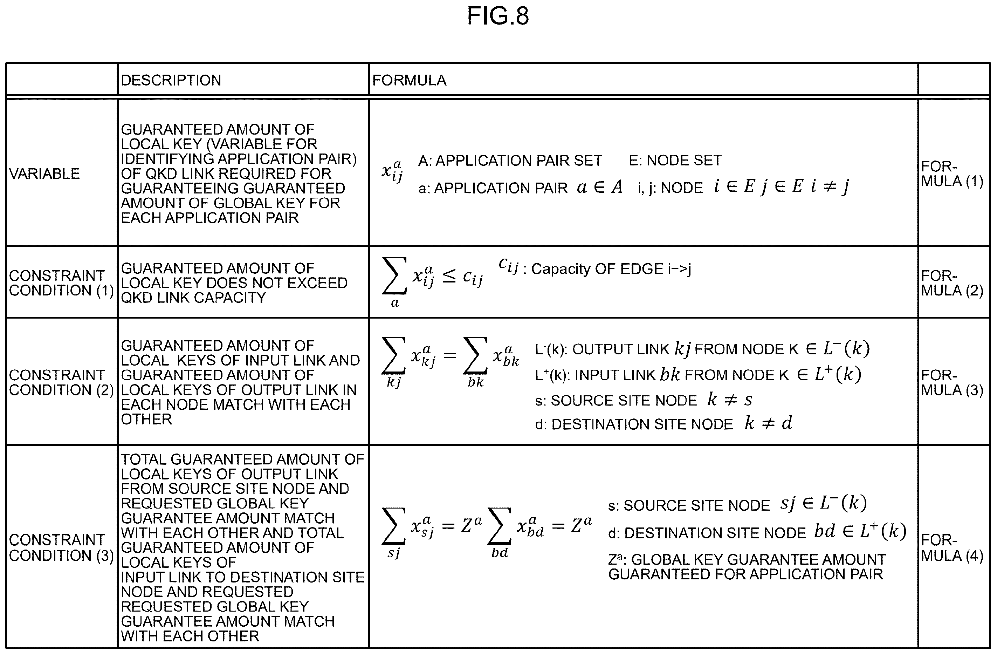

Fig. 8 is a diagram illustrating an example of a variable and constraint conditions in the guarantee amount calculation method according to the arrangement.

The variable of Formula (1) represents the guaranteed amount of the local key of each link required for the guaranteed amount of the global key to be encrypted and decrypted that is requested for each application pair.

Formula (2) represents that the guaranteed amount of the local key does not exceed the link capacity (constraint condition (1)). The unit of the guaranteed amount of the local key is arbitrary, and is represented by, for example, bit or byte.

Formula (3) represents that the total guaranteed amount of the local keys of all of input links and the total guaranteed amount of the local keys of all of output links in each node 100 match with each other (constraint condition (2)).

Formula (4) represents that the total guaranteed amount of the local keys of all of output links from the source-site node 100 and the requested global key guarantee amount match with each other and that the total guaranteed amount of the local keys of all of input links from the destination-site node 100 and the requested global key guarantee amount match with each other (constraint condition (3)).

In addition, when the guaranteed amount of the global key is calculated, the guarantee amount calculation unit 113 sets, for example, objective functions illustrated in Fig. 9.

Fig. 9 is a diagram illustrating an example of the objective functions in the guarantee amount calculation method according to the arrangement.

In an objective function A (Formula (5)), the amount of the local key 301 used for relaying the global key 401 in the entire key sharing network 502 can be reduced, and unnecessary consumption of the local key 301 can be avoided.

In an objective function B (Formula (6)), by preferentially selecting a link having a large link capacity, shortage of the local key 301 in the link can be avoided, and the remaining local keys 301 are equalized.

In an objective function C (Formula (7)), the amount of stored local key of each link is maximized while being equalized.

In an objective function D (Formula (8)), the amount of the local key used in each link is equalized as much as possible.

Next, the details of examples of the setting method of the route constraint condition by the setting unit 117 according to the arrangement will be described.

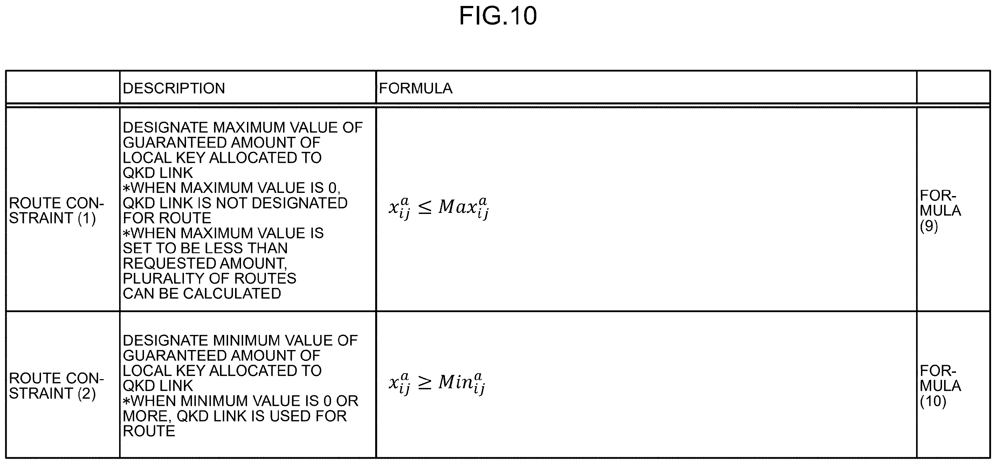

Fig. 10 is a diagram illustrating an example of the route constraint condition according to the arrangement. When route constraint conditions (constraint conditions of a link that is used for the route and a link that is not used for the route) are present in each piece of application pair information acquired from the storage unit 115, the setting unit 117 adds the route constraints (1) and (2) of Formulae (9) and (10). The addition of the route constraints (1) and (2) is executed before calculating the guaranteed amount of the local key required for each link to satisfy the guaranteed amounts of the global keys for the plurality (for example, all) of application pairs in the guarantee amount calculation unit 113.

Using the route constraints (1) and (2), the setting unit 117 sets a link to be included in the route or a link to be excluded from the route.
· When (the guaranteed amount of the local key of the designated link) == (the requested global key guarantee amount), only a route that passes through the link is selected. A strict constraint where the plurality of (for example, all) of the guaranteed amounts of the local keys uses this link is satisfied. As a route for satisfying the global key guarantee amount from the source site to the destination site of the application pair, a plurality of routes may be selected.
· When (the guaranteed amount of the local key of the designated link) <= (a value less than the requested global key guarantee amount), a route that passes through the link is selected, however, a route that does not include the link is also necessarily selected. That is, as a route for satisfying the global key guarantee amount from the source site to the destination site of the application pair, a plurality of routes is necessarily selected, or there is no solution of finding the route for satisfying the global key guarantee amount.
· When (the guaranteed amount of the local key of the designated link) >= 1, a route that passes through the link is selected, however, a route that does not include the link may also be selected in this condition. For example, when 1 or more is set as a minimum value in the route constraint (2), a relaxed constraint where at least the guarantee amount of one local key is used for this link is satisfied.

Through the above-described setting process by the setting unit 117, flexible route selection for each application pair can be executed. Specifically, a link to be included in the route and a link to be excluded from the route can be designated. Further based on the constraint condition of the link, the guarantee amount calculation unit 113 calculates a guaranteed amount of a local key allocated to the link for relaying the global key 401 of each of the plurality of application pairs.

Next, the details of examples of the guaranteeable amount calculation method using the guaranteeable amount calculation unit 118 according to the arrangement will be described.

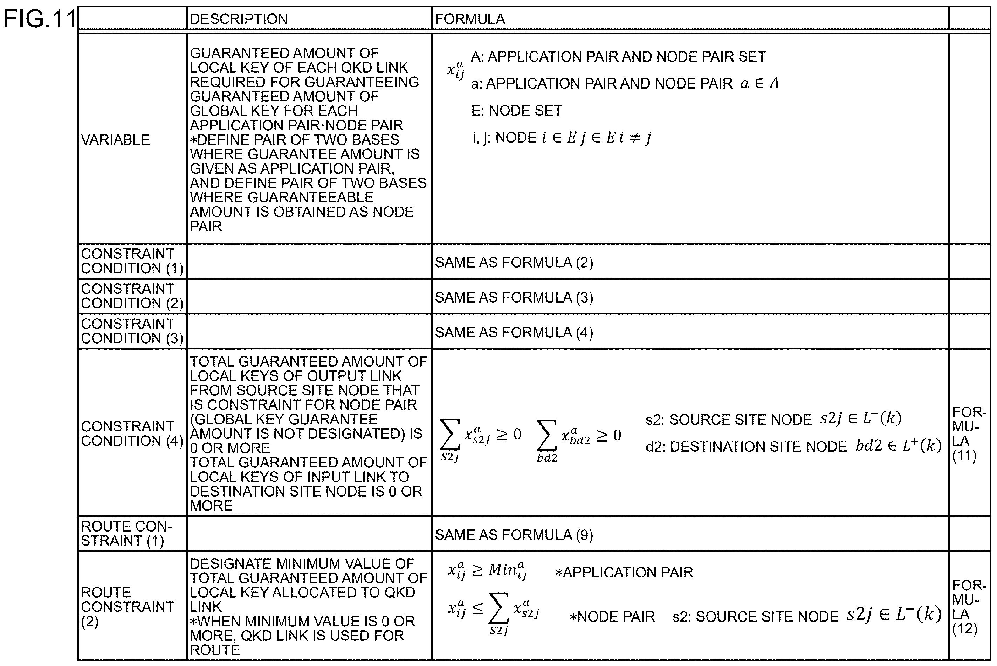

Fig. 11 is a diagram illustrating an example of a variable and constraint conditions in the guaranteeable amount calculation method according to the arrangement. Fig. 11 illustrates an example of a formula for calculating the maximum global key guarantee amount that can be guaranteed for the application pair by the guaranteeable amount calculation unit 118.

Constraint conditions (1) to (3) are the same as those of the example of Fig. 8.

Formula (11) is a constraint for a node pair (a request for the global key guarantee amount is not designated) (constraint condition (4)). Specifically, Formula (11) represents that the total guaranteed amount of the local keys of all of output links from the source-site node 100 is 0 or more and that the total guaranteed amount of the local keys of all of input links from the destination-site node 100 is 0 or more.

The route constraint (1) and the route constraint (2) of Formula (12) are the same as those of the example of Fig. 10. In the route constraint (2), a condition that the guaranteed amount of the local key using the designated link is less than the total guaranteed amount of the local keys of all of output links from the source-site node 100 is added.

By collectively calculating distribution routes of the maximum global keys 401 that can be guaranteed for previously registered application pairs and newly registered application pairs through the calculation formula of Fig. 11, an optimal global key distribution route where the local keys 301 of the links are not occupied by only the previously registered application pairs can be determined.

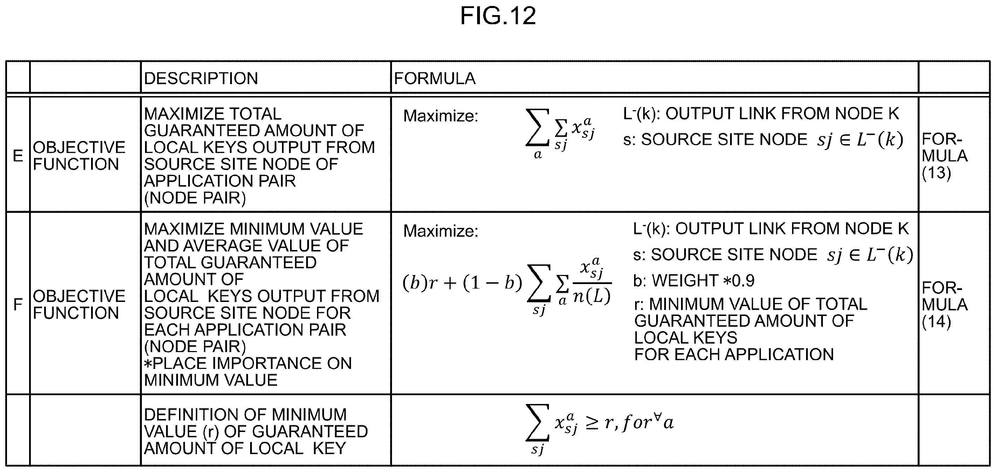

In addition, when the maximum guaranteed amount of the global key that can be guaranteed for the application pair is calculated, the guaranteeable amount calculation unit 118 sets, for example, objective functions illustrated in Fig. 12.

Fig. 12 is a diagram illustrating an example of the objective functions in the guaranteeable amount calculation method according to the arrangement.

In an objective function E (Formula (13)), the total guaranteed amount of the local keys output from the source-site node 100 of the application pair/a pair of applications (node pair/a pair of nodes) is maximized. That is, in the objective function E, the amount of the global key 401 relayed in the entire key sharing network 502 is maximized.

In an objective function F (Formula (14)), a minimum value and an average value of the total guaranteed amount of the local keys output from the source-site node 100 of the application pair (node pair) are maximized. Depending on a weighting method, the degrees of importance of the minimum value and the average value are selected. That is, in the objective function F, the amount of the local key used in each link is equalized as much as possible.

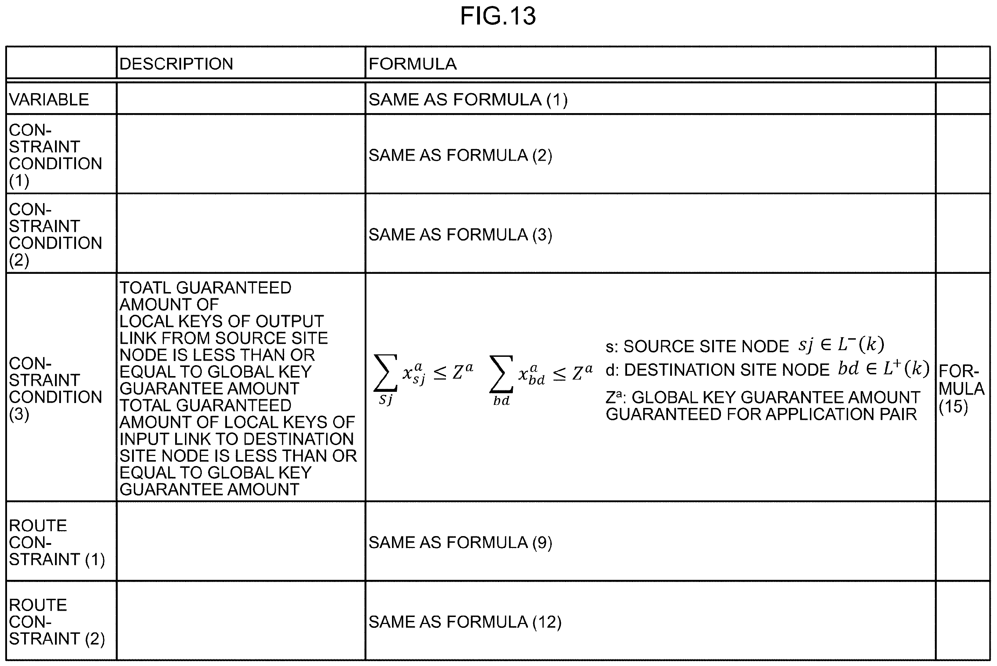

Next, when the guaranteed amounts of the global keys cannot be guaranteed for the plurality of application pairs in Step S7 above, a method of calculating the guaranteeable amount using the adjustment method 3 of the adjustment unit 116 in Step S8 will be described. The guaranteeable amount calculation unit 118 calculates Formulae of Fig. 13.

Fig. 13 is a diagram illustrating an example of a variable and constraint conditions in the guaranteeable amount calculation method in Step S8 according to the arrangement.

The variable and the constraint conditions (1) and (2) are the same as those of the example of Fig. 8.

Formula (15) is a constraint for the node pair (constraint condition (3)). Specifically, Formula (15) represents that the total guaranteed amount of the local keys of all of output links from the source-site node 100 is less than or equal to the requested global key guarantee amount and that the total guaranteed amount of the local keys of all of input links from the destination-site node 100 is less than or equal to the requested global key guarantee amount.

The route constraints (1) and (2) are the same as those of the example of Fig. 10.

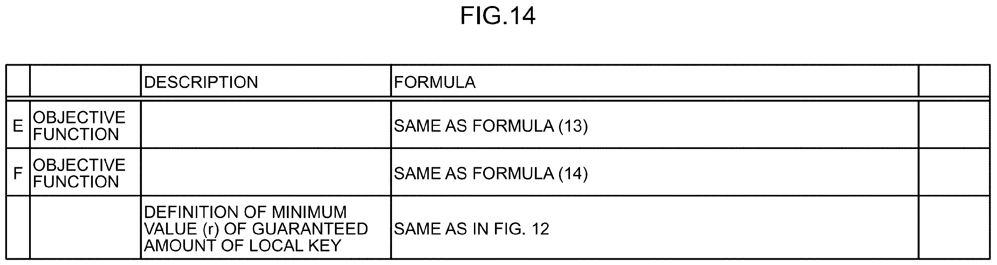

In addition, when the calculation of Fig. 13 is executed, the guaranteeable amount calculation unit 118 sets, for example, objective functions illustrated in Fig. 14.

Fig. 14 is a diagram illustrating an example of the objective functions in the guaranteeable amount calculation method of Fig. 13. The description of Fig. 14 is the same as that of Fig. 12, and thus is omitted.

As described above, in the node 100 according to the arrangement (an example of the quantum cryptography communication control device), the collection unit 111 collects link information of a link for which a local key 301 is generated by quantum key distribution and the guarantee amount of a global key of each of a plurality of application pairs executing cryptography communication using a global key 401. The calculation unit 112 calculates a link cost used for selecting a relay route of the global key 401 based on the link information. The guarantee amount calculation unit 113 calculates a guaranteed amount of a local key allocated to the link for relaying the global key 401 of each of the plurality of application pairs such that the guaranteed amounts of the global keys for the plurality of application pairs are simultaneously satisfied. The selection unit 114 selects the relay route of the global key 401 based on the link cost and the guaranteed amount of the local key.

As a result, in the node 100 according to the arrangement, a route of cryptography relaying of the global key 401 can be optimally determined using the local key 301 shared in each link of the key sharing network 502 where quantum key distribution is used.

Specifically, in the node 100 according to the arrangement, the local key guarantee amount is calculated such that the guarantee amounts of the global keys for the plurality (for example, all) of application pairs are simultaneously satisfied. As a result, for example, without depending on the guaranteed amounts of the global keys, the route settings, and the like of previously registered application pairs, a route of cryptography relaying of the global key 401 in the entire key sharing network 502 can be optimally determined.

### Modification Example 1 of Arrangement

Next, Modification Example 1 of the arrangement will be described. In the description of Modification Example 1, the same description as that of the arrangement will be omitted, and different portions from the arrangement will be described.

### Example of Configuration

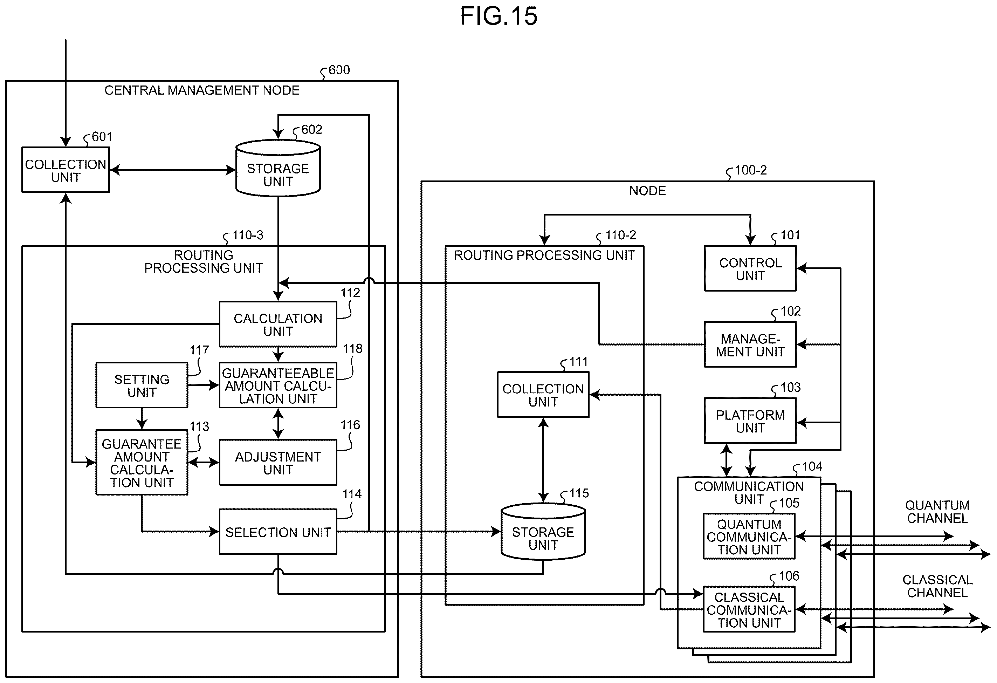

Fig. 15 is a diagram illustrating an example of a configuration of Modification Example 1 of the arrangement. In Modification Example 1, the node 100 according to the above-described arrangement is separated from a node 100-2 and a central management node 600.

The node 100-2 includes the control unit 101, the management unit 102, the platform unit 103, the communication unit 104, and a routing processing unit 110-2. The routing processing unit 110-2 includes the collection unit 111 and the storage unit 115.

The central management node 600 (an example of the quantum cryptography communication control device) includes a collection unit 601, a storage unit 602, and a routing processing unit 110-3. The routing processing unit 110-3 includes the calculation unit 112, the guarantee amount calculation unit 113, the selection unit 114, the adjustment unit 116, the setting unit 117, and the guaranteeable amount calculation unit 118.

As illustrated in Fig. 15, the route calculation process by the calculation unit 112, the guarantee amount calculation unit 113, the selection unit 114, the adjustment unit 116, the setting unit 117, and the guaranteeable amount calculation unit 118 may be executed by the central management node 600.

The quantum cryptography communication system 1 according to Modification Example 1 includes a plurality of nodes 100-2 and the central management node 600. The plurality of nodes 100-2 includes the collection unit 111 (first collection unit) configured to collect link information of a link for which a local key 301 is generated by quantum key distribution and a guaranteed amount of the global key foreach of a plurality of application pairs executing cryptography communication using a global key 401.

In addition, in the central management node 600 according to Modification Example 1, the collection unit 601 (second collection unit) collects the link information and the guaranteed amount of the global key collected by the plurality of nodes 100-2. The calculation unit 112 calculates a link cost used for selecting a relay route of the global key 401 based on the link information. The guarantee amount calculation unit 113 calculates a guaranteed amount of a local key allocated to the link for relaying the global key 401 of each of the plurality of application pairs such that the guaranteed amounts of the global keys for the plurality of application pairs are simultaneously satisfied. The selection unit 114 selects the relay route of the global key 401 based on the link cost and the guaranteed amount of the local key.

### Modification Example 2 of Arrangement

Next, Modification Example 2 of the arrangement will be described. In the description of Modification Example 2, the same description as that of the arrangement will be omitted, and different portions from the arrangement will be described.

### Example of Configuration

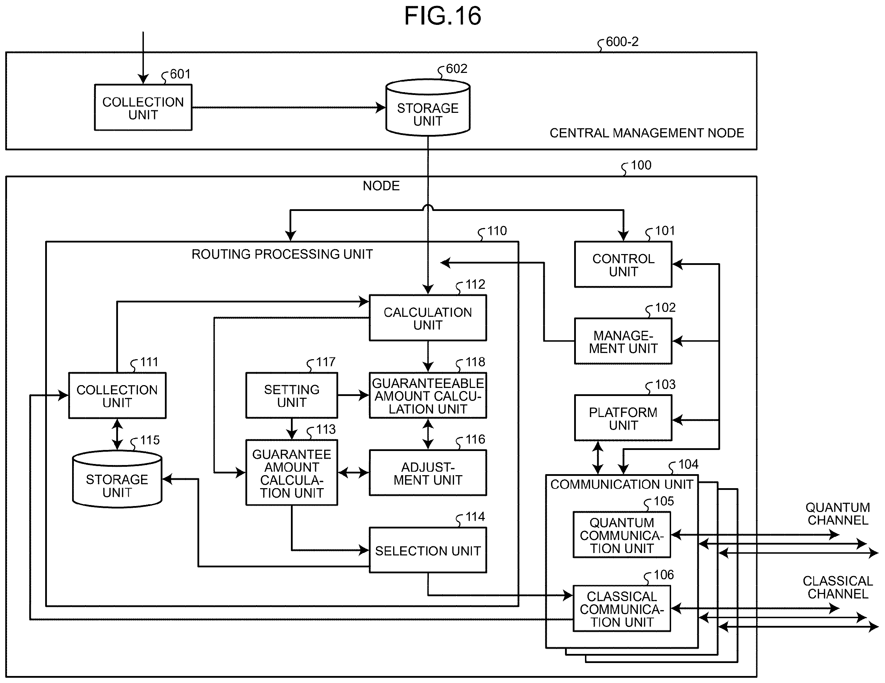

Fig. 16 is a diagram illustrating an example of a configuration of Modification Example 2 of the arrangement. In Modification Example 2, the node 100 according to the above-described arrangement is separated into a node 100 and a central management node 600-2.

The configuration of the node 100 (an example of the quantum cryptography communication control device) according to Modification Example 2 is the same as that of the arrangement. The central management node 600-2 includes the collection unit 601 and the storage unit 602.

As illustrated in Fig. 16, each of the nodes 100 may execute the route calculation process such that the route calculation is distributed, and the route calculation result by each of the nodes 100 may be stored in the storage unit 602 of the central management node 600.

Finally, an example of hardware configurations of the node 100 and the central management node 600 according to the arrangement will be described. Since the hardware configurations of the node 100 and the central management node 600 are the same, the case of the node 100 will be described as an example.

### Example of Hardware Configuration

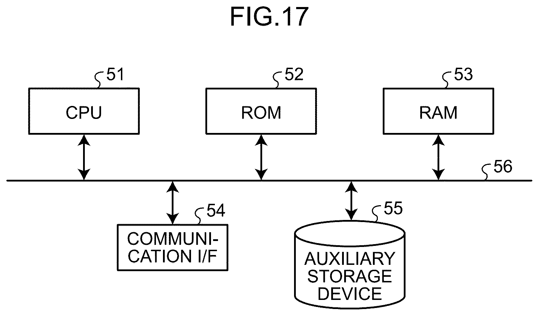

Fig. 17 is a diagram illustrating an example of the hardware configuration of the node 100 according to the arrangement. The node 100 includes a CPU (Central Processing Unit) 51, a ROM (Read Only Memory) 52, a RAM (Random Access Memory) 53, a communication I/F 54, and an auxiliary storage device 55. The CPU 51, the ROM 52, the RAM 53, the communication I/F 54, and the auxiliary storage device 55 are connected through a bus 56.

The CPU 51 (an example of a processor) executes a program read from the ROM 52 (an example of a main storage device), the auxiliary storage device 55, or the like to the RAM 53. The auxiliary storage device 55 is a HDD (Hard Disk Drive), a memory card, or the like.

The node 100 may further include a display device that displays a state or the like of the node 100, an input device that receives an input from a user, and the like.

The communication I/F 54 includes a quantum communication IF and a classical communication IF. The quantum communication IF is an interface for connection to a quantum channel (optical fiber link). The classical communication IF is an interface for connection to a classical channel.

The program executed by the node 100 is stored as a file of an installable format or an executable format in a computer-readable storage medium such as a CD-ROM, a memory card, a CD-R, or a DVD (Digital Versatile Disc), and is provided as a computer program product.

In addition, the program executed by the node 100 may be configured to be stored in a computer connected to a network such as the Internet and to be provided by being downloaded through the network.

In addition, the program executed by the node 100 may be configured to be provided through a network such as the Internet without being downloaded.

In addition, the program executed by the node 100 may be configured to be previously incorporated into a ROM or the like and provided.

The program executed by the node 100 has a module configuration having a function that is implementable by the program among the above-described functional configurations of the node 100. The function implemented by the program is loaded to the RAM 53 when the CPU 51 reads the program from the storage medium such as the auxiliary storage device 55 and executes the read program. That is, the function implemented by the program is generated on the RAM 53.

Some or all of the functions of the node 100 may be implemented by hardware such as an IC (Integrated Circuit). The IC is, for example, a processor that executes a dedicated process.

In addition, when each function is implemented by a plurality of processors, each processor may implement one of the functions or may implement two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

## Claims

1. A quantum cryptography communication control device (100) comprising:
a collection unit (111) configured to collect link information of a link for which a local key is generated by quantum key distribution and a guaranteed amount of the global key for each of a plurality of application pairs executing cryptography communication using a global key;
a calculation unit (112) configured to calculate a link cost used for selecting a relay route of the global key based on the link information;
a guarantee amount calculation unit (113) configured to calculate a guaranteed amount of a local key allocated to the link for relaying the global key of each of the plurality of application pairs such that guaranteed amounts of global keys for the plurality of application pairs are simultaneously satisfied; and
a selection unit (114) configured to select the relay route of the global key based on the link cost and the local key guarantee amount.

2. The quantum cryptography communication control device (100) according to claim 1, wherein
the guarantee amount calculation unit (113) executes calculation of calculating the local key guarantee amount allocated to the link as a multi-commodity flow problem where the application pair is considered as a commodity and the local key guarantee amount is considered as a flow such that the guaranteed amounts of the global keys are simultaneously satisfied.

3. The quantum cryptography communication control device (100) according to claim 1 or 2, wherein
when guaranteed amount of the global key for at least one application pair is not satisfied, the collection unit (111) further collects information representing calculating or not calculating a guaranteeable amount of the global key for each of the plurality of application pairs, and
the quantum cryptography communication control device (100) further comprises a guaranteeable amount calculation unit (118) configured to calculate, when calculating a guaranteeable amount of the global key for each of the plurality of application pairs, the local key guarantee amount allocated to the link for relaying the global key of each of the plurality of application pairs such that guaranteeable amounts of global keys for the plurality of application pairs are simultaneously satisfied.

4. The quantum cryptography communication control device (100) according to claim 3, wherein
the guaranteeable amount calculation unit (118) executes calculation of calculating the local key guarantee amount allocated to the link as a multi-commodity flow problem where the application pair is considered as a commodity and the local key guarantee amount is considered as a flow such that the guaranteeable amounts of the global keys are simultaneously satisfied.

5. The quantum cryptography communication control device (100) according to claim 1 or 2, further comprising:
an adjustment unit (116) configured to adjust, when a guaranteed amount of the global key for at least one application pair is not satisfied, the guaranteed amount of the global key according to a predetermined policy, wherein
the guarantee amount calculation unit (113) calculates the local key guarantee amount allocated to the link for relaying the global key of each of the plurality of application pairs such that adjusted, guaranteed amounts of the global keys are simultaneously satisfied.

6. The quantum cryptography communication control device (100) according to claim 5, wherein
the collection unit (111) further collects information representing a priority of the guaranteed amount of the global key for each of the plurality of application pairs, and
in the predetermined policy, as the priority lowers, a reduction in the guaranteed amount of the global key for each of the plurality of application pairs increases.

7. The quantum cryptography communication control device (100) according to claim 5, wherein
in the predetermined policy, the guaranteed amounts of the global keys for the plurality of application pairs are reduced uniformly.

8. The quantum cryptography communication control device (100) according to claim 5, wherein
in the predetermined policy, based on a usage history of the global key of each of the plurality of application pairs, for an application pair with a less usage amount of the global key that has been used, a reduction in the guaranteed amount of the global key for the application pair increases.

9. The quantum cryptography communication control device (100) according to claim 5, wherein
in the predetermined policy, as a remaining period of a unit guarantee period of the global key decreases, a reduction in the guaranteed amount of the global key for the application pair increases.

10. The quantum cryptography communication control device (100) according to claim 5, wherein
the collection unit (111) further collects information representing necessitating or not necessitating guaranteeing the guaranteed amount of the global key for each of the plurality of application pairs, and
in the predetermined policy, a guaranteed amount of the global key for an application pair not necessitating guaranteeing the guaranteed amount of the global key is reduced.

11. The quantum cryptography communication control device (100) according to claim 1 or 2, wherein
the collection unit (111) further collects information representing a constraint condition of the link used for the relay route of the global key of each of the plurality of application pairs, and
the guarantee amount calculation unit (113) calculates, further based on the constraint condition of the link, the local key guarantee amount allocated to the link for relaying the global key of each of the plurality of application pairs.

12. A quantum cryptography communication system (1) comprising:
a plurality of nodes (100); and
a central management node (600), wherein
the plurality of nodes (100) includes
a first collection unit (111) configured to collect link information of a link for which a local key is generated by quantum key distribution and a guaranteed amount of a global key for each of a plurality of application pairs executing cryptography communication using a global key, and
the central management node (600) includes
a second collection unit (601) configured to collect the link information and guaranteed amounts of global keys collected by the plurality of nodes (100),
a calculation unit (112) configured to calculate a link cost used for selecting a relay route of the global key based on the link information,
a guarantee amount calculation unit (113) configured to calculate a guaranteed amount of a local key allocated to the link for relaying the global key of each of the plurality of application pairs such that the guaranteed amounts of the global keys for the plurality of application pairs are simultaneously satisfied, and
a selection unit (114) configured to select the relay route of the global key based on the link cost and the local key guarantee amount.

13. A quantum cryptography communication control method implemented by a computer of a quantum cryptography communication control device (100), the method comprising:
collecting link information of a link for which a local key is generated by quantum key distribution and a guaranteed amount of a global key for each of a plurality of application pairs executing cryptography communication using a global key;
calculating a link cost used for selecting a relay route of the global key based on the link information;
calculating a guaranteed amount of a local key allocated to the link for relaying the global key of each of the plurality of application pairs such that guaranteed amounts of global keys for the plurality of application pairs are simultaneously satisfied; and
selecting the relay route of the global key based on the link cost and the local key guarantee amount.

14. A computer program product having a computer readable medium including instructions stored thereon, wherein the instructions, when executed by a computer, cause the computer to function as:
a collection unit (111) configured to collect link information of a link for which a local key is generated by quantum key distribution and a guaranteed amount of a global key for each of a plurality of application pairs executing cryptography communication using the global key;
a calculation unit (112) configured to calculate a link cost used for selecting a relay route of the global key based on the link information;
a guarantee amount calculation unit (113) configured to calculate a guaranteed amount of a local key allocated to the link for relaying the global key of each of the plurality of application pairs such that guaranteed amounts of global keys for the plurality of application pairs are simultaneously satisfied; and
a selection unit (114) configured to select the relay route of the global key based on the link cost and the local key guarantee amount.
